(19)

Europäisches Patentamt

European Patent Office

Office européen des brevets

(11)  **EP 4 494 798 A1**

(12)  **EUROPEAN PATENT APPLICATION**
published in accordance with Art. 153(4) EPC

(43) Date of publication:
**22.01.2025  Bulletin 2025/04**

(51) International Patent Classification (IPC):
**B23K 11/11** (2006.01)     **B23K 11/25** (2006.01)

(21) Application number: 23823455.3

(22) Date of filing: 22.02.2023

(52) Cooperative Patent Classification (CPC):
**B23K 11/11; B23K 11/25;** Y02P 10/20

(86) International application number:
**PCT/JP2023/006580**

(87) International publication number:
**WO 2023/243151 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **16.06.2022   JP 2022097641**

(71) Applicant: JFE Steel Corporation
**Tokyo 100-0011 (JP)**

(72) Inventors:
• **KAWABE, Nao**
  **Tokyo 100-0011 (JP)**
• **TANIGUCHI, Koichi**
  **Tokyo 100-0011 (JP)**
• **TAKASHIMA, Katsutoshi**
  **Tokyo 100-0011 (JP)**
• **MATSUDA, Hiroshi**
  **Tokyo 100-0011 (JP)**

(74) Representative: Hoffmann Eitle
**Patent- und Rechtsanwälte PartmbB
Arabellastraße 30
81925 München (DE)**

(54)  **METHOD FOR PREDICTING RESISTANCE SPOT WELDING SPATTER GENERATION, RESISTANCE SPOT WELDING METHOD, AND METHOD FOR MANUFACTURING WELDED MEMBER**

(57)     Provided is a method of predicting expulsion occurrence in resistance spot welding that can predict with high precision whether expulsion will occur throughout the welding process without conducting advance testing. The method includes predicting whether expulsion will occur from mating surfaces of the steel sheets based on a rate of increase of a molten region of the material to be joined and a change over time of a pressure state of a non-molten region of the material to be joined during welding.

*FIG. 3*

W:pressure width
a:radius of molten region
b:radius of pressure region

EP 4 494 798 A1

## EP 4 494 798 A1

### Description

TECHNICAL FIELD

The present disclosure relates to a method of predicting expulsion occurrence in resistance spot welding, a resistance spot welding method, and a method of producing a welded member.

BACKGROUND

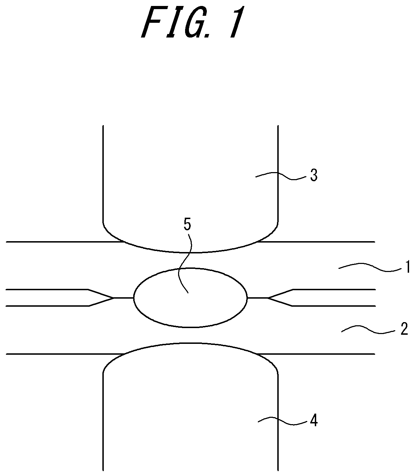

Typically, in joining of automobile bodies (hereinafter also referred to automotive bodies), resistance spot welding, a type of lap resistance welding, is used. As illustrated in FIG. 1, this welding method is a method of squeezing two or more overlapped steel sheets 1, 2, which are material to be joined, between a pair of electrodes 3, 4, and joining the steel sheets by passing a welding current between the electrodes while the electrodes apply pressure from above and below. In this welding method, a point-like welded portion is obtained by using resistance heat generated by the welding current to melt the steel sheets. The welded portion is called a nugget 5. That is, the nugget 5 is the portion that melts and solidifies at the contact point of the overlapped steel sheets 1, 2 when the electric current flows through the steel sheets. The steel sheets are spot-welded by the nugget 5.

In resistance spot welding, the electrodes maintain pressure on the material to be joined during welding to prevent molten metal from spattering outward from the mating surfaces of the steel sheets. However, when the internal pressure of the molten metal cannot be suppressed by the electrode force, a phenomenon called expulsion, in which the molten metal spatters outward, may occur. When expulsion occurs, spattered molten metal adheres to an area around the welded portion, degrading appearance. Further, variations in nugget diameter and joint strength are caused, resulting in unstable welded joint quality. Therefore, from the viewpoint of improving quality and securing strength of a welded joint, it is desirable to obtain a nugget having a large diameter while minimizing expulsion.

To obtain a nugget having a large diameter, heat input during welding needs to be large. However, a larger heat input increases the risk of expulsion. Accordingly, selecting welding conditions that can both suppress expulsion and secure nugget diameter (hereinafter also referred to as welding conditions that allow high-quality welding) is not easy.

Typically, when joining steel sheets by resistance spot welding, many advance tests are conducted to search for welding conditions that allow high-quality welding. Appropriate conditions are then selected by checking the results for nugget diameter and expulsion occurrence. For example, for actual joining of an automotive body, it is necessary to conduct advance tests on a huge variety of sheet combinations expected to be used in the automotive body, and select appropriate welding conditions. The implementation of such advance tests is a factor that increases the cost of production. The above problems are not limited to resistance spot welding of steel sheets for automobiles, but also apply to other applications of resistance spot welding of steel sheets.

In response to such problems, for example, Patent Literature (PTL) 1 describes:

"a method of predicting spatter occurrence in resistance spot welding is a method of predicting whether spattering will occur at a contact interface between any two or more parts to be welded in contact with each other in resistance spot welding, where the two or more parts to be welded are squeezed between two electrodes and a current is passed through the electrodes while the electrodes press the two or more parts to be welded together, wherein whether spattering will occur is predicted based on:

an electrode force, which is the force of the electrodes pressing on the parts to be welded; and
a force acting on the non-fusion zone, which is an interface where any two of the parts to be welded in contact with each other during resistance spot welding contact each other without melting."

CITATION LIST

Patent Literature

PTL 1: JP 2007-283328 A

SUMMARY

(Technical Problem)

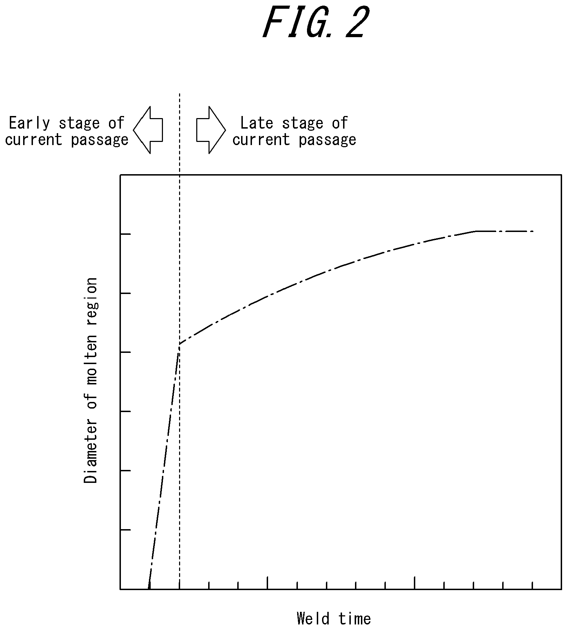

FIG. 2 illustrates an example of the relationship between weld time and the diameter of a molten region of material to be joined by a typical single current pass when resistance spot welding is performed with two overlapped steel sheets as the material to be joined. After the molten region of the material to be joined solidifies, the molten region becomes a nugget. As illustrated in FIG. 2, the molten region expands rapidly in the early stage of current passage. Then, in the late stage of current passage, the diameter change of the molten region becomes slower and approaches a saturation diameter (final nugget diameter). This change in the rate of increase of the molten area (nugget growth rate) during current passage is influenced by changes in contact diameter between the electrodes and the steel sheets and between the steel sheets during the current passage, changes in resistance due to temperature changes, and the like. Further, internal pressure of molten metal varies with time. Further, as the current passage proceeds, microstructure of the non-molten region around the nugget, which is under pressure from the electrodes, also changes. Therefore, predicting whether expulsion will occur throughout the welding process based solely on the electrode force and forces acting on the non-molten region is difficult.

In fact, the technology described in PTL 1 often fails to predict whether expulsion will occur in resistance spot welding, depending on the material to be joined and welding conditions, and there is a demand for improvement in prediction precision.

In view of the current situation described above, it would be helpful to provide a method of predicting expulsion occurrence in resistance spot welding that can predict with high precision whether expulsion will occur throughout the welding process without conducting advance testing.

Further, it would be helpful to provide a resistance spot welding method and a method of producing a welded member, in which resistance spot welding is performed under welding conditions determined based on the method of predicting expulsion occurrence in resistance spot welding.

(Solution to Problem)

The inventors engaged in extensive studies and made the following discoveries.

(1) As mentioned above, in resistance spot welding, the electrodes maintain pressure on the material to be joined during welding to prevent molten metal from spattering outward from the mating surfaces of the steel sheets. Therefore, there is a correlation between expulsion occurrence and the pressure state of the non-molten region surrounding the molten region of the material to be joined. However, during welding, nugget formation behavior changes over time. Therefore, whether expulsion will occur cannot be predicted with a high degree of precision based solely on the pressure state of the non-molten region.

(2) Based on the above points, the inventors conducted studies and made the following discoveries. In addition to considering the change over time in the pressure state of the non-molten region, it is effective to further take into account the effect of the rate at which the molten region increases (nugget growth rate). This allows prediction of whether expulsion will occur throughout the welding process with high precision.

(3) That is, when the rate of increase of the molten region is fast, the temperature change of the molten region is steep and softening by heating of the non-molten region around the molten region does not proceed sufficiently. Further, internal pressure due to the molten metal is also high, and therefore expulsion becomes relatively likely. On the other hand, when the rate of increase of the molten region is slow, the non-molten region around the molten region softens sufficiently as the molten region expands. Further, the internal pressure due to the molten metal is also low, and therefore expulsion is less likely to occur than when the molten region increases at a faster rate. Therefore, by taking into account changes over time in the pressure state of the non-molten region and the effect of the rate of increase of the molten region, it is possible to predict with high precision whether expulsion will occur throughout the welding process.

(4) Further, for example, W and $dW/dt$ are preferably used as parameters representing the rate of increase of the molten region of the material to be joined and the change over time of the pressure state of the non-molten region of the material to be joined during welding.

Here,

W is width (mm) of the non-molten region at the mating surfaces of the steel sheets where compressive stress in the direction of the thickness of the material to be joined is less than p (MPa),
t is weld time (ms), and
$dW/dt$ is change over time of W (mm/ms).

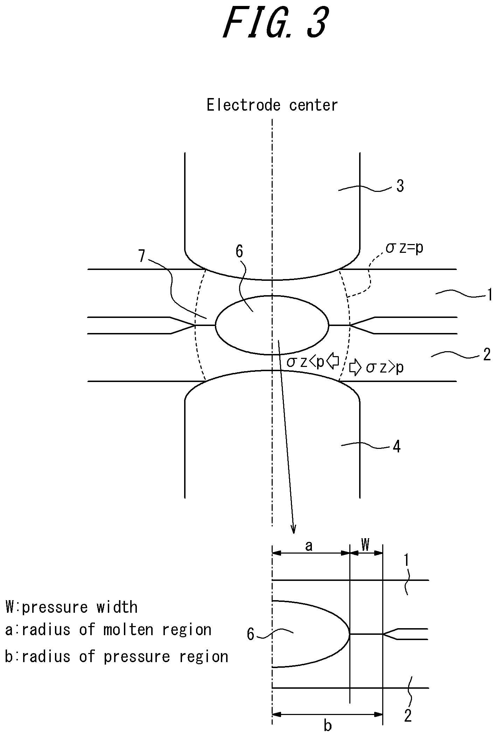

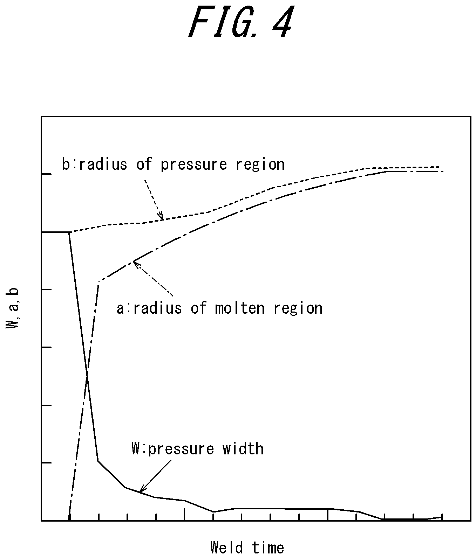

(5) As illustrated in FIG. 3, W means the width (hereinafter also referred to as "pressure width") of the non-molten region (hereinafter referred to as "pressure region 7") where compressive stress $\sigma z$ in the thickness direction of the material to be joined (hereinafter also referred to as "compressive stress $\sigma z$") that is less than p (MPa) acts on the mating surfaces of the steel sheets that are the material to be joined. FIG. 4 shows an example of the relationship between the weld time at the mating surfaces of steel sheets, the pressure width W, the radius of the molten region a, and the radius of the pressurized region b when resistance spot welding is performed on two overlapped steel sheets as the material to be joined. In resistance spot welding, the pressure state and the molten state of the material to be joined are basically axially symmetrical about the electrode center at the mating surfaces of the steel sheets as material to be joined. That is, the pressure width W is the radius b of the pressure region minus the radius a of the molten region. As illustrated in FIG. 4, in the early stage of current passage, when the rate of increase of the radius a of the molten region is fast, that is, the nugget growth rate is fast, the non-molten region is not softened sufficiently. Therefore, the rate of increase of the radius b of the pressure region is smaller than the rate of increase of the radius a of the molten region. On the other hand, in the late stage of current passage, when the rate of increase of the radius a of the molten region is slow, that is, the nugget growth rate is slow, the rate of increase of the radius b of the pressure region and that of the molten region are at the same level.

(6) Accordingly, the pressure width W, which is the value obtained by subtracting the radius a of the molten region from the radius b of the pressure region, and the change over time, dW/dt, are parameters that appropriately express the pressure state of the non-molten region of the material to be joined, taking into account the effect of the rate of increase of the molten region (nugget growth rate). By using W and dW/dt at various weld times, it is possible to predict with higher precision whether expulsion will occur throughout the welding process.

The present disclosure is based on these discoveries and further studies.

Primary features of the present disclosure are as follows.

1. A method of predicting expulsion occurrence in resistance spot welding of two or more overlapped steel sheets as material to be joined, the method comprising:
predicting whether expulsion will occur from mating surfaces of the steel sheets based on a rate of increase of a molten region of the material to be joined and a change over time of a pressure state of a non-molten region of the material to be joined during welding.

2. The method of predicting expulsion occurrence in resistance spot welding according to 1, above, wherein W and dW/dt are used as parameters representing the rate of increase of the molten region of the material to be joined and the change over time of the pressure state of the non-molten region of the material to be joined during welding, where

W is width in mm of the non-molten region at the mating surfaces of the steel sheets where compressive stress in the direction of the thickness of the material to be joined is less than p in MPa,
t is weld time in ms, and
dW/dt is change over time of W in mm/ms.

3. The method of predicting expulsion occurrence in resistance spot welding according to 2, above, wherein

p is in a range from -100 MPa to 0 MPa, and
from a welding start point to a welding end point,
when there is at least one of a point in time when the following Expression (1) is satisfied or a point in time when the following Expression (2) is satisfied, then expulsion is predicted to occur, and
when there is no point in time when Expression (1) is satisfied and no point in time when Expression (2) is satisfied, then expulsion is predicted to not occur,
in a time period where dW/dt ≤ -0.010,

$$W < a \times D^{0.3} \qquad \dots(1)$$

in a time period where dW/dt > -0.010,

$$W < b \times D^{0.3} \qquad \dots(2)$$

where

D is thickness in mm of the material to be joined,
a is coefficient a,
b is coefficient b,
and a > b.

4. The method of predicting expulsion occurrence in resistance spot welding according to 3, above, wherein the coefficient a is in a range from 0.10 to 0.30 and the coefficient b is in a range from 0.01 to 0.25.

5. A resistance spot welding method comprising resistance spot welding under welding conditions determined based on the method of predicting expulsion occurrence in resistance spot welding according to any one of 1 to 4, above.

6. A method of producing a welded member, the method comprising resistance spot welding under welding conditions determined based on the method of predicting expulsion occurrence in resistance spot welding according to any one of 1 to 4, above, to produce a welded member.

(Advantageous Effect)

According to the present disclosure, whether expulsion will occur can be predicted with high precision throughout the welding process without conducting advance testing, making it possible to select welding conditions that allow high-quality welding, efficiently and at low cost. Further, this greatly improves the productivity of welded members produced by resistance spot welding, such as automotive bodies, and has a significant industrial effect.

BRIEF DESCRIPTION OF THE DRAWINGS

In the accompanying drawings:

FIG. 1 is a diagram schematically illustrating an example of resistance spot welding;

FIG. 2 is a diagram illustrating an example of the relationship between weld time and diameter of a molten region of material to be joined;

FIG. 3 is a diagram schematically illustrating pressure width W;

FIG. 4 is a diagram illustrating an example of the relationship between weld time, pressure width W, radius a of the molten region, and radius b of a pressure region;

FIG. 5 is a diagram schematically illustrating an example of minimum pressure width when a three sheet combination is used as the material to be joined;

FIG. 6 is a diagram schematically illustrating an example of minimum pressure width when mating surfaces of steel sheets as material to be joined are not axially symmetrical about an electrode center;

FIG. 7 is a diagram illustrating an example of the relationship between weld time t and pressure width W; and

FIG. 8 is a diagram illustrating an example of the relationship between weld time t and pressure width W.

DETAILED DESCRIPTION

The following describes embodiments of the present disclosure. First, a method of predicting expulsion occurrence in resistance spot welding according to an embodiment of the present disclosure is described.

[1] Method of predicting expulsion occurrence in resistance spot welding

The method of predicting expulsion occurrence in resistance spot welding according to an embodiment of the present disclosure is

a method of predicting expulsion occurrence in resistance spot welding of two or more overlapped steel sheets as material to be joined, the method comprising:

predicting whether expulsion will occur from mating surfaces of the steel sheets based on a rate of increase of a molten region of the material to be joined and a change over time of a pressure state of a non-molten region of the material to be joined during welding.

As mentioned above, by taking into account changes over time in the pressure state of the non-molten region of material to be joined and the effect of the rate of increase of the molten region, it is possible to predict with high precision whether expulsion (expulsion from mating surfaces of the steel sheets) will occur throughout the welding process.

Further, as mentioned above, W and dW/dt are preferably used as parameters representing the rate of increase of the molten region of the material to be joined and the change over time of the pressure state of the non-molten region of the material to be joined during welding.

Here,

W is width in mm of the non-molten region at the mating surfaces of the steel sheets where compressive stress in the direction of the thickness of the material to be joined is less than p in MPa,

t is weld time in ms, and

dW/dt is change over time of W in mm/ms.

The weld time is 0 at welding start (current start).

Here, W and dW/dt can be calculated, for example, by modeling a sheet combination of the material to be joined that is the subject of prediction and deriving, by numerical analysis, compressive stress σz at various positions in the material to be joined, range of the molten region, and range of the non-molten region at each point in weld time.

An example of numerical analysis is single-point welding analysis using the resistance welding simulation software SORPAS® (SORPAS is a registered trademark in Japan, other countries, or both). As analysis conditions, examples are: welded portion vicinity mesh is a rectangle of 0.01 mm to 0.5 mm per side, and time pitch for outputting the pressure width W is 1 ms to 100 ms. Other conditions may be in accordance with a conventional method. The setting of welding conditions (type and thickness of steel sheet as material to be joined, electrode force due to electrical power, current value, and weld time) may be made according to welding conditions for which expulsion occurrence or non-occurrence is predicted.

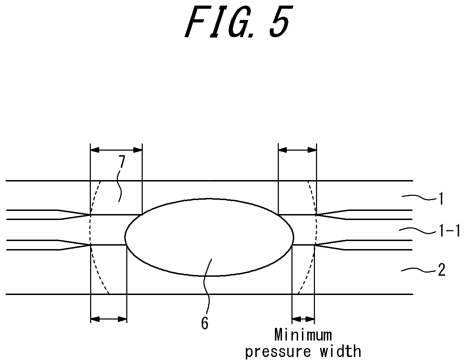

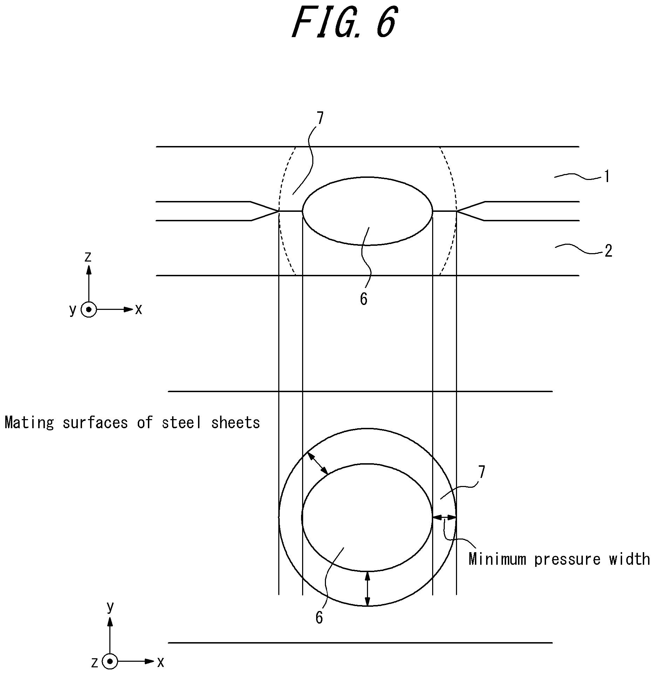

As illustrated in FIG. 5, when there are three or more steel sheets as material to be joined, the minimum pressure width at mating surfaces of the sheets (hereinafter also referred to as minimum pressure width) may be used as W (reference sign 1-1 in FIG. 5 indicates a steel sheet (middle steel sheet)). Further, as illustrated in FIG. 6, even when the mating surfaces of the steel sheets as material to be joined are not axially symmetrical about an electrode center, the minimum pressure width (the pressure width in the direction where the distance from the electrode center to the end of the pressure region minus the distance from the electrode center to the end of the molten region is the minimum value) may be used as W.

Further, p is preferably set in a range from -100 MPa to 0 MPa. For p, tensile stress is represented as + and compressive stress is represented as -. That is, p is an index for setting the width of the pressure region that is subjected to compressive stress in the thickness direction of the material to be joined by the electrodes, and therefore a range indicating that stress less than p is compressive stress is required, that is, p needs to be 0 MPa or less. On the other hand, when p is less than -100 MPa, the pressure width region becomes extremely small, and the prediction precision of whether expulsion will occur, which is determined by the pressure width, may decrease. Therefore, p is preferably set in the range from -100 MPa to 0 MPa. p is more preferably -70 MPa or more. Further, p is more preferably -10 MPa or less.

After setting p in a range described above, then, as a preferred example, from a welding start point to a welding end point,

when there is at least one of a point in time when the following Expression (1) is satisfied or a point in time when the following Expression (2) is satisfied, then expulsion is predicted to occur, and
when there is no point in time when Expression (1) is satisfied and no point in time when Expression (2) is satisfied, then expulsion is predicted to not occur.

In a time period where dW/dt ≤ -0.010,

$$W < a \times D^{0.3} \qquad \ldots(1)$$

In a time period where dW/dt > -0.010,

$$W < b \times D^{0.3} \qquad \ldots(2)$$

Here,

D is thickness in mm of the material to be joined,
a is coefficient a, and
b is coefficient b.

When the thickness of the material to be joined is large, the volume of the molten metal is large, resulting in greater internal pressure, and even when the same pressure width is maintained, expulsion is more likely to occur. Therefore, both Expressions (1) and (2) above are specified to take into account the effect of the thickness of the material to be joined.

The coefficient a and the coefficient b are not particularly limited. For example, the coefficient a is preferably set in a range from 0.10 to 0.30. The coefficient b is preferably set in a range from 0.01 to 0.25. Further, in the time period where dW/dt ≤ -0.010, the pressure width decreases rapidly, making expulsion more likely, and a relatively wide pressure width is required to suppress expulsion. On the other hand, in the time period where dW/dt > -0.010, the change in pressure width is small. Therefore, expulsion is less likely to occur than in the time period where dW/dt ≤ -0.010, and as wide a pressure width is not required to suppress expulsion. Therefore, preferably, a > b. More preferably, a > 1.3 × b. Even more preferably, a > 2 × b. The coefficient a and the coefficient b are set as appropriate in the ranges described above, according to the numerical analysis conditions for determining W and the like.

Further, as parameters representing the rate of increase in the molten region of the material to be joined during welding and the change over time in the pressure state of the non-molten region of the material to be joined, aside from the stress in the thickness direction of the material to be joined as described above, examples include indexes using equivalent stress or maximum principal stress. When using these indexes to predict whether expulsion will occur, the same evaluation can be made as when using the stress in the thickness direction of the material to be joined. For example, when using the maximum principal stress to determine whether expulsion will occur, it is possible to determine whether expulsion will occur by evaluating dW'/dt, where W' (mm) is the width of the non-molten region where the maximum principal stress $\sigma$max of the material to be joined, which is less than p' (MPa), acts on the mating surfaces of the steel sheets that are the material to be joined. The methods of calculating W' and dW'/dt and the method of determining whether expulsion will occur according to W' and dW'/dt may be the same as when W and dW/dt are used as parameters representing the rate of increase of the molten region of the material to be joined and the change over time of the pressure state of the non-molten region of the material to be joined during welding, as described above. For example, W and dW/dt in Expressions (1) and (2) may be replaced as W' and dW'/dt, respectively. Accordingly, when there is at least one of a point in time when Expression (1) after the replacement is satisfied or a point in time when Expression (2) after the replacement is satisfied, then expulsion is predicted to occur. On the other hand, when there is no point in time when Expression (1) after the replacement is satisfied and no point in time when Expression (2) after the replacement is satisfied, then expulsion is predicted to not occur. The suitable ranges of the coefficient a and the coefficient b are the same as described above. Further, p' is preferably set in a range from -100 MPa to 0 MPa. p' is more preferably -70 MPa or more. Further, p' is more preferably -10 MPa or less.

The welding conditions for predicting whether expulsion will occur by the method of predicting expulsion occurrence in resistance spot welding according to an embodiment of the present disclosure are not particularly limited.

For example, the thicknesses of the steel sheets used as the material to be joined are not limited. The method is particularly applicable when the material to be joined is steel sheets having thicknesses of 0.5 mm or more to 3.0 mm or less, as typically used as members for automobiles.

Further, the types of steel sheets used as the material to be joined are not particularly limited. The method is applicable to a steel sheet without a coating or plating on a surface (hereinafter also referred to as an "uncoated steel sheet") as well as a steel sheet with a coating or plating on a surface (hereinafter also referred to as a "coated steel sheet") as the material to be joined. Examples of coating or plating include Zn coating or plating (coating or plating having Zn content of 50 mass% or more) and Al coating or plating (coating or plating having Al content of 50 mass% or more). Examples of Zn coating or plating include hot-dip galvanizing (GI), Zn-Ni coating or plating, Zn-Al coating or plating, and the like. Further, examples of Al coating or plating include Al-Si coating plating (for example, Al-Si coating or plating containing 10 mass% to 20 mass% Si), and the like. Hot-dip coating may be hot-dip alloying coating. Hot-dip alloying coating includes, for example, galvannealing (GA).

Further, the number of steel sheets as material to be joined is not particularly limited, as long as there are two or more sheets. The type and shape of each steel sheet may be the same or different from each other. That is, each steel sheet may be of the same type and the same shape, or each may be a steel sheet of a different type and a different shape. The thickness D of the material to be joined is also not limited. The method is particularly applicable when the thickness D of the material to be joined is 1.0 mm to 5.0 mm.

In addition, the current pattern is not particularly limited. The method is applicable not only to a typical single current pass, but also to upslope current passing, downslope current passing, multi-stage current passing, and the like. Further, the method can also be applied to both direct current and alternating current. Further, the pressure pattern is not particularly limited. The method is applicable not only to single-stage pressure, but also to multi-stage pressure.

Further, type of tip of the electrodes is also not particularly limited. The method is applicable to electrodes including a dome-radius (DR) type, radius (R) type, dome (D) type, and the like, as described in Japanese Industrial Standard JIS C 9304:1999. Further, tip diameter of the electrodes is also not particularly limited. For example, the method is applicable to electrodes having tip diameters from 4 mm to 16 mm.

[2] Resistance spot welding method

The resistance spot welding method according to an embodiment of the present disclosure is performing resistance spot welding under welding conditions determined based on the method of predicting expulsion occurrence in resistance spot welding.

Specifically, welding conditions (current pattern, pressure pattern, current value, and electrode force ) are selected based on the prediction results of the method of predicting expulsion occurrence in resistance spot welding to obtain a desired nugget diameter without expulsion throughout the welding process, and resistance spot welding is performed according to the welding conditions selected.

The welding apparatus, for example, the configuration for supplying the current and controlling the current value during current passing, is not particularly limited, and any conventionally known apparatus may be used.

[3] Method of producing welded member

The method of producing a welded member according to an embodiment of the present disclosure includes performing resistance spot welding under welding conditions determined based on the method of predicting expulsion occurrence in resistance spot welding, to produce a welded member. The procedure for performing resistance spot welding is as described under [2], above. Examples of welded members include automotive parts.

EXAMPLES

Various sheet combinations as material to be joined listed in Table 1 were modeled, and whether expulsion would occur when resistance spot welding was performed under conditions listed in Table 1 was predicted under various prediction conditions listed in Table 2. W and dW/dt were used as parameters representing the rate of increase of the molten region of the material to be joined during welding and the change over time of the pressure state of the non-molten region of the material to be joined. W and dW/dt were calculated by numerical analysis according to the procedure described above. Numerical analysis was performed by two-dimensional axisymmetric analysis of single-point welding using the resistance welding simulation software SORPAS® 2D (SORPAS is a registered trademark in Japan, other countries, or both). The analysis conditions were welded portion vicinity mesh: square having 0.1 mm sides; time pitch for outputting the pressure width W: 20 ms; and other conditions according to conventional methods. Further, whether expulsion would occur from a welding start point to a welding end point was predicted. When there was at least one of a point in time when Expression (1) was satisfied or a point in time when Expression (2) was satisfied, then expulsion was predicted to occur. When there was no point in time when Expression (1) was satisfied and no point in time when Expression (2) was satisfied, then expulsion was predicted to not occur. Prediction results are listed in Table 3.

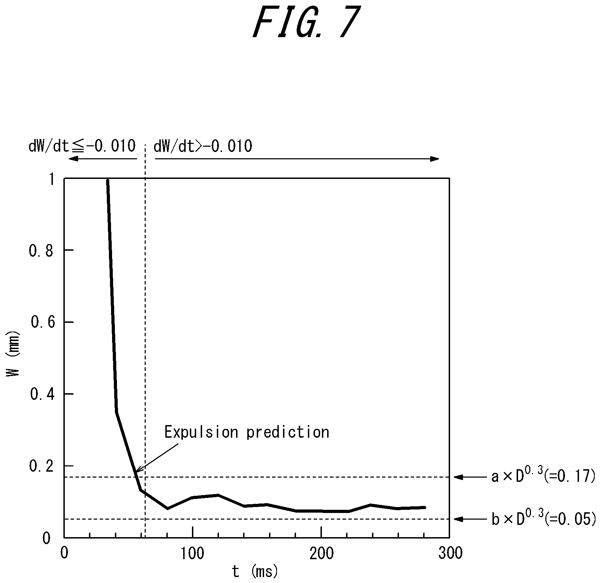

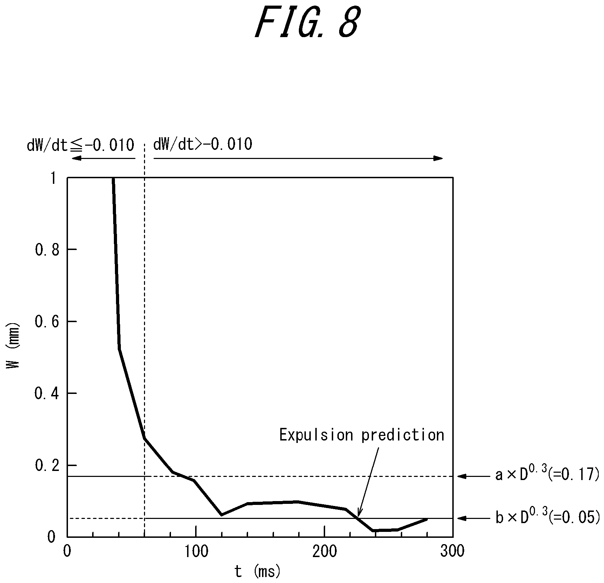

For reference, FIG. 7 illustrates the relationship between weld time t and pressure width W for welding condition e and prediction condition A. In this case, expulsion is predicted to occur because there is a time point in the time period where dW/dt ≤ -0.010 that satisfies Expression (1). Further, FIG. 8 illustrates the relationship between weld time t and pressure width W for welding condition c and prediction condition A. In this case, expulsion is predicted to occur because there is a time point in the time period where dW/dt > -0.010 that satisfies Expression (2).

Further, for comparison, under prediction condition F, regardless of dW/dt, expulsion was predicted to occur when there was a point in time between the welding start point and the welding end point that satisfied $W < 0.03 \times D^{0.3}$, and no expulsion was predicted when there was no point in time when $W < 0.03 \times D^{0.3}$ was satisfied.

Further, under prediction condition G, regardless of dW/dt, expulsion was predicted to occur when there was a point in time between the welding start point and the welding end point that satisfied $W < 0.13 \times D^{0.3}$, and no expulsion was predicted when there was no point in time when $W < 0.13 \times D^{0.3}$ was satisfied.

Further, as prediction condition H, maximum principal stress was used to predict whether expulsion would occur. W' and dW'/dt were used as parameters representing the rate of increase of the molten region of the material to be joined during welding and the change over time of the pressure state of the non-molten region of the material to be joined. Here, W' is width in mm of the non-molten region at the mating surfaces of the steel sheets where maximum principal stress of the material to be joined is less than -50 MPa. W' and dW'/dt were calculated by numerical analysis using the same procedure for calculating W and dW/dt described above. Further, whether expulsion would occur was predicted. When there was at least one of a point in time when the following Expression (1)' was satisfied or a point in time when the following Expression (2)' was satisfied, then expulsion was predicted to occur. When there was no point in time when Expression (1)' was satisfied and no point in time when Expression (2)' was satisfied, then expulsion was predicted to not occur. The prediction results are listed in Table 3.

In a time period where dW'/dt ≤ -0.010,

$$W' < 0.32 \times D^{0.3} \qquad \ldots (1)'$$

In a time period where dW'/dt > -0.010,

$$W' < 0.08 \times D^{0.3} \qquad \ldots (2)'$$

Further, various sheet combinations as material to be joined listed in Table 1 were prepared, and resistance spot welding was actually carried out under the conditions listed in Table 1 to check for expulsion occurrence. In all actual welding, chromium-copper DR-type electrodes each having tip diameter: 6 mm and curvature radius: 40 mm were used. Further, the electrode force was controlled by driving the upper electrode with a servo motor, and DC power supply was used during current passing. The results of the checks are listed in Tables 1 and 3. Under all of the conditions, in cases where no expulsion was observed, the desired nugget diameter was obtained.

Based on the above prediction results and the results of checking for expulsion during actual welding, prediction accuracy rate for each prediction condition was determined and prediction precision was evaluated according to the following criteria. The evaluation results are listed in Table 3.

Pass (excellent): prediction accuracy rate of 90 % or more
Pass (good): prediction accuracy of 70 % or more (excluding ◎)
Fail: prediction accuracy less than 70 %

[Table 1]

Table 1

| Welding conditions | Material to be joined (sheet combination) | | | | Electrode force | | | | Current value | | | | | | Expulsion in actual welding? |
|---|---|---|---|---|---|---|---|---|---|---|---|---|---|---|---|
| | | | | | 1st stage | | 2nd stage | | Upslope | 1st stage | | 2nd stage | | | |
| | 1st sheet | 2nd sheet | 3rd sheet | D (mm) | Electrode force (kN) | Time (ms) | Electrode force (kN) | Time (ms) | Time (ms) | Current value (kA) | Time (ms) | Current value (kA) | Time (ms) | |
| a | 1180 MPa grade GA (thickness 1.2 mm) | 1180 MPa grade GA (thickness 1.2 mm) | - | 2.4 | 3500 | 280 | - | - | - | 6.0 | 280 | - | | No |
| b | 1180 MPa grade GA (thickness 1.2 mm) | 1180 MPa grade GA (thickness 1.2 mm) | - | 2.4 | 3500 | 280 | - | - | - | 7.0 | 280 | - | | No |
| c | 1180 MPa grade GA (thickness 1.2 mm) | 1180 MPa grade GA (thickness 1.2 mm) | - | 2.4 | 3500 | 280 | - | - | - | 8.0 | 280 | - | | Yes |
| d | 1180 MPa grade GA (thickness 1.2 mm) | 1180 MPa grade GA (thickness 1.2 mm) | - | 2.4 | 3500 | 280 | - | - | - | 8.0 | 100 | 9.0 | 180 | Yes |
| e | 1180 MPa grade GA (thickness 1.2 mm) | 1180 MPa grade GA (thickness 1.2 mm) | - | 2.4 | 2000 | 280 | - | - | - | 6.5 | 280 | - | | Yes |
| f | 270 MPa grade GA (thickness 0.6 mm) | 980 MPa grade CR (thickness 1.4 mm) | 980 MPa grade CR (thickness 1.4 mm) | 3.4 | 3500 | 400 | - | - | - | 8.5 | 360 | - | | No |

(continued)

| Welding conditions | Material to be joined (sheet combination) | | | | Electrode force | | | | Current value | | | | | | Expulsion in actual welding? |
|---|---|---|---|---|---|---|---|---|---|---|---|---|---|---|---|
| | 1st sheet | 2nd sheet | 3rd sheet | D (mm) | 1st stage | | 2nd stage | | Upslope | 1st stage | | 2nd stage | | |  |
| | | | | | Electrode force (kN) | Time (ms) | Electrode force (kN) | Time (ms) | Time (ms) | Current value (kA) | Time (ms) | Current value (kA) | Time (ms) | |
| g | 270 MPa grade GA (thickness 0.6 mm) | 980 MPa grade CR (thickness 1.4 mm) | 980 MPa grade CR (thickness 1.4 mm) | 3.4 | 3500 | 400 | - | | 40 | 9.0 | 400 | - | | No |
| h | 270 MPa grade GA (thickness 0.6 mm) | 980 MPa grade CR (thickness 1.4 mm) | 980 MPa grade CR (thickness 1.4 mm) | 3.4 | 3500 | 400 | - | | - | 9.5 | 400 | - | | Yes |
| i | 270 MPa grade GA (thickness 0.6 mm) | 980 MPa grade CR (thickness 1.4 mm) | 980 MPa grade CR (thickness 1.4 mm) | 3.4 | 2500 | 150 | 3500 | 250 | - | 9.5 | 400 | - | | Yes |
| j | 270 MPa grade GA (thickness 0.6 mm) | 980 MPa grade CR (thickness 1.4 mm) | 980 MPa grade CR (thickness 1.4 mm) | 3.4 | 3500 | 400 | - | | - | 10.5 | 40 | 7.0 | 360 | Yes |
| GA: galvannealed steel sheet, CR: cold-rolled steel sheet (uncoated steel sheet) | | | | | | | | | | | | | | |

[Table 2]

Table 2

| Prediction condition | p (MPa) | Coefficient | | Remarks |
|---|---|---|---|---|
| | | a | b | |
| A | -70 | 0.13 | 0.04 | Example |
| B | -10 | 0.25 | 0.08 | Example |
| C | -10 | 0.33 | 0.08 | Example |
| D | -10 | 0.27 | 0.26 | Example |
| E | -110 | 0.07 | 0.00 | Example |
| F | -70 | Predict whether expulsion will occur by $W < 0.03 \times D^{0.3}$ | | Comparative Example |
| G | -70 | Predict whether expulsion will occur by $W < 0.13 \times D^{0.3}$ | | Comparative Example |

[Table 3]

Table 3

| | | Prediction conditions | | | | | | | | | | | | | | | | Expulsion in actual welding? |
| | | A | | B | | C | | D | | E | | F | | G | | H | | |
| | | Prediction result | Hit or miss? | Prediction result | Hit or miss? | Prediction result | Hit or miss? | Prediction result | Hit or miss? | Prediction result | Hit or miss? | Prediction result | Hit or miss? | Prediction result | Hit or miss? | Prediction result | Hit or miss? | |
|---|---|---|---|---|---|---|---|---|---|---|---|---|---|---|---|---|---|---|
| Welding conditions | a | No | Hit | No | Hit | No | Hit | No | Hit | No | Hit | No | Hit | Yes | Miss | No | Hit | No |
| | b | No | Hit | No | Hit | Yes | Miss | Yes | Miss | Yes | Miss | No | Hit | Yes | Miss | Yes | Miss | No |
| | c | Yes | Hit | Yes | Hit | Yes | Hit | Yes | Hit | Yes | Hit | Yes | Hit | Yes | Hit | Yes | Hit | Yes |
| | d | Yes | Hit | Yes | Hit | Yes | Hit | Yes | Hit | Yes | Hit | No | Miss | Yes | Hit | Yes | Hit | Yes |
| | e | Yes | Hit | Yes | Hit | Yes | Hit | Yes | Hit | Yes | Hit | No | Miss | Yes | Hit | Yes | Hit | Yes |
| | f | No | Hit | No | Hit | No | Hit | No | Hit | Yes | Miss | No | Hit | Yes | Miss | No | Hit | No |
| | g | No | Hit | No | Hit | Yes | Miss | Yes | Miss | Yes | Miss | No | Hit | Yes | Miss | Yes | Miss | No |
| | h | Yes | Hit | Yes | Hit | Yes | Hit | Yes | Hit | Yes | Hit | No | Miss | Yes | Hit | Yes | Hit | Yes |
| | i | Yes | Hit | Yes | Hit | Yes | Hit | Yes | Hit | Yes | Hit | No | Miss | Yes | Hit | Yes | Hit | Yes |
| | j | Yes | Hit | Yes | Hit | Yes | Hit | Yes | Hit | Yes | Hit | No | Miss | Yes | Hit | Yes | Hit | Yes |
| Prediction precision | Accuracy rate | 100 % (10/10) | | 100 % (10/10) | | 80 % (8/10) | | 80 % (8/10) | | 70 % (7/10) | | 50% (5/10) | | 60 % (6/10) | | 80 % (8/10) | | - |
| | Evaluation | Pass (excellent) | | Pass (excellent) | | Pass (good) | | Pass (good) | | Pass (good) | | Fail | | Fail | | Pass (good) | | - |
| Remarks | | Example | | Example | | Example | | Example | | Example | | Comparative Example | | Comparative Example | | Example | | - |

EP 4 494 798 A1

As can be seen from Table 3, all of the Examples were able to predict with high precision whether expulsion would occur. In contrast, the Comparative Examples could not predict with sufficient precision whether expulsion would occur.

REFERENCE SIGNS LIST

| | |
|---|---|
| 1 | steel sheet (upper steel sheet) |
| 1-1 | teel sheet (middle steel sheet) |
| 2 | steel sheet (lower steel sheet) |
| 3 | electrode (upper electrode) |
| 4 | electrode (lower electrode) |
| 5 | nugget |
| 6 | molten region |
| 7 | pressure region |

**Claims**

1. A method of predicting expulsion occurrence in resistance spot welding of two or more overlapped steel sheets as material to be joined, the method comprising:
predicting whether expulsion will occur from mating surfaces of the steel sheets based on a rate of increase of a molten region of the material to be joined and a change over time of a pressure state of a non-molten region of the material to be joined during welding.

2. The method of predicting expulsion occurrence in resistance spot welding according to claim 1, wherein W and dW/dt are used as parameters representing the rate of increase of the molten region of the material to be joined and the change over time of the pressure state of the non-molten region of the material to be joined during welding, where

W is width in mm of the non-molten region at the mating surfaces of the steel sheets where compressive stress in the direction of the thickness of the material to be joined is less than p in MPa,
t is weld time in ms, and
dW/dt is change over time of W in mm/ms.

3. The method of predicting expulsion occurrence in resistance spot welding according to claim 2, wherein

p is in a range from -100 MPa to 0 MPa, and
from a welding start point to a welding end point,
when there is at least one of a point in time when the following Expression (1) is satisfied or a point in time when the following Expression (2) is satisfied, then expulsion is predicted to occur, and
when there is no point in time when Expression (1) is satisfied and no point in time when Expression (2) is satisfied, then expulsion is predicted to not occur,
in a time period where dW/dt ≤ -0.010,

$$W < a \times D^{0.3} \qquad \ldots(1)$$

in a time period where dW/dt > -0.010,

$$W < b \times D^{0.3} \qquad \ldots(2)$$

where

D is thickness in mm of the material to be joined,
a is coefficient a,
b is coefficient b,
and a > b.

4.  The method of predicting expulsion occurrence in resistance spot welding according to claim 3, wherein the coefficient a is in a range from 0.10 to 0.30 and the coefficient b is in a range from 0.01 to 0.25.

5.  A resistance spot welding method comprising resistance spot welding under welding conditions determined based on the method of predicting expulsion occurrence in resistance spot welding according to any one of claims 1 to 4.

6.  A method of producing a welded member, the method comprising resistance spot welding under welding conditions determined based on the method of predicting expulsion occurrence in resistance spot welding according to any one of claims 1 to 4, to produce a welded member.

# FIG. 1

# FIG. 2

Early stage of current passage ⇐ | ⇒ Late stage of current passage

Diameter of molten region

Weld time

# FIG. 3

Electrode center

σz=p

σz<p ⇦  ⇨ σz>p

W:pressure width
a:radius of molten region
b:radius of pressure region

# FIG. 4

# FIG. 5

# FIG. 6

Mating surfaces of steel sheets

Minimum pressure width

# FIG. 7

# FIG. 8

dW/dt≦−0.010   dW/dt>−0.010

Expulsion prediction

$a \times D^{0.3}(=0.17)$

$b \times D^{0.3}(=0.05)$

W (mm)

t (ms)

## INTERNATIONAL SEARCH REPORT

| International application No. |
| --- |
| **PCT/JP2023/006580** |

**A.    CLASSIFICATION OF SUBJECT MATTER**

***B23K 11/11***(2006.01)i; ***B23K 11/25***(2006.01)i
FI:    B23K11/11 540; B23K11/25

According to International Patent Classification (IPC) or to both national classification and IPC

**B.    FIELDS SEARCHED**

Minimum documentation searched (classification system followed by classification symbols)

B23K11/11; B23K11/25

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2015-131327 A (NIPPON STEEL & SUMITOMO METAL CORP.) 23 July 2015 (2015-07-23)<br>    claims 1-3, fig. 1-8 | 1-6 |
| A | JP 7-96376 A (TOYOTA JIDOSHA KABUSHIKI KAISHA) 11 April 1995 (1995-04-11)<br>    claims 1-3, fig. 1-13 | 1-6 |
| A | JP 11-285848 A (DENGENSHA MFG. CO., LTD.) 19 October 1999 (1999-10-19)<br>    claim 1, fig. 1-9 | 1-6 |
| A | EP 3412397 A1 (ROBERT BOSCH GMBH) 12 December 2018 (2018-12-12)<br>    claims 1-14, fig. 1, 2 | 1-6 |

☐ Further documents are listed in the continuation of Box C.          ☑ See patent family annex.

| | |
| --- | --- |
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **01 May 2023** | **16 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/006580**

| Patent document cited in search report | | | Publication date (day/month/year) | Patent family member(s) | | | Publication date (day/month/year) |
|---|---|---|---|---|---|---|---|
| JP | 2015-131327 | A | 23 July 2015 | (Family: none) | | | |
| JP | 7-96376 | A | 11 April 1995 | US | 5582747 | A | |
| | | | | claims 1-22, fig. 1-24 | | | |
| | | | | EP | 640428 | A1 | |
| | | | | KR | 95-0005437 | A | |
| JP | 11-285848 | A | 19 October 1999 | (Family: none) | | | |
| EP | 3412397 | A1 | 12 December 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007283328 A